# FASCICULE DE BREVET EUROPEEN

(11) **EP 2 546 140 B1**
(45) Date de publication et mention de la délivrance du brevet: **21.08.2013**
(21) Numéro de dépôt: 12173055.0
(22) Date de dépôt: 21.06.2012
(51) Int. Cl.: B64C 25/50, B64C 25/26, B64C 25/30

(54) **Procédé de gestion de l'orientation de roues d'aéronef, notamment en cas d'éclatement ou dégonflement de pneumatiques**
Verfahren zur Steuerung der Radausrichtung eines Luftfahrzeugs, insbesondere im Falle eines Platzens der Reifen oder bei Reifenunterdruck
Method for managing the orientation of the wheels of an aircraft, in particular in the event of the tyres bursting or deflating

(30) Priorité: 12.07.2011 FR 1156326
(43) Date de publication de la demande: 16.01.2013
(73) Titulaire: Messier-Bugatti-Dowty, 78140 Velizy Villacoublay (FR)
(72) Inventeur: Benmoussa, Michaël, 78140 Velizy Villacoublay (FR); Fraval, Jérôme, 78140 Velizy Villacoublay (FR)
(74) Mandataire: Parzy, Benjamin Alain

(56) Documents cités:
- EP-A1- 1 739 010
- EP-A1- 1 964 772

## Description

L'invention est relative à un procédé de maintien de roues d'aéronef dans l'axe.

### ARRIERE-PLAN TECHNOLOGIQUE DE L'INVENTION

Les aéronefs possèdent en général un atterrisseur auxiliaire vers l'avant de l'appareil qui comporte une partie inférieure orientable qui porte les roues de l'atterrisseur et qui est associée à une commande d'orientation pour orienter la partie basse orientable au sol afin de faciliter les déplacements de l'aéronef. L'invention a plus particulièrement trait aux atterrisseurs directs dans lesquels la partie inférieure forme la partie coulissante de l'amortisseur de l'atterrisseur.

Lorsque l'atterrisseur a été déployé préalablement à l'atterrissage, la partie inférieure est maintenue dans l'axe par l'intermédiaire de cames disposées sur la partie inférieure et sur la partie fixe de l'atterrisseur, les cames étant maintenues en coopération par l'effet de la pression interne de l'amortisseur.

Lorsque l'aéronef atterrit, la partie inférieure de l'atterrisseur est enfoncée dans l'atterrisseur et les cames sont alors dégagées. Lorsque la vitesse de l'aéronef descend au dessous d'un seuil donné, la commande d'orientation est activée et maintient la partie inférieure de l'atterrisseur dans l'axe, tant que le pilote ne commande pas l'orientation des roues.

EP 1 964772 A1 est considéré comme l'état de la technique le plus proche de l'object de la revendication 1 et divulgue toutes les caractéristiques du préambule de la revendication 1. Cependant, il existe un risque que l'un des pneumatiques soit dégonflé ou qu'il éclate, pendant la phase non contrôlée par la commande d'orientation. Dans ces conditions, la partie inférieure tourne d'elle-même sous l'effet de la traînée de frottement sur le sol subie par la roue dont le pneumatique reste correctement gonflé, de sorte que les roues se retrouvent d'équerre par rapport à la trajectoire, ce qui peut conduire à l'éclatement des pneumatiques et la détérioration des jantes des roues.

En outre, lors des phases de roulage après l'atterrissage ou avant le décollage, un dégonflement important ou un éclatement d'un des pneumatiques risque de faire dévier l'aéronef ou endommager l'atterrisseur en raison d'une embardée soudaine.

### OBJET DE L'INVENTION

L'invention a pour objet un procédé de gestion de l'orientation des roues d'un atterrisseur, évitant tout embarquement de la partie inférieure orientable, notamment au moment du toucher des roues.

### BREVE DESCRIPTION DE L'INVENTION

En vue de la réalisation de ce but, on propose un procédé de gestion de l'orientation de roues d'atterrisseur d'aéronef portées par une partie inférieure orientable de celui-ci, la partie inférieure étant associée à une commande d'orientation comportant un organe d'orientation apte à orienter la partie inférieure de l'atterrisseur en réponse à un ordre d'orientation. Selon l'invention, le procédé comporte les étapes de :
- surveiller les pressions des pneumatiques portés par les roues et, en réponse à la détection d'au moins l'un des évènements suivants:
   * la pression de l'un des pneumatiques est inférieure à un premier seuil déterminé ;
   * la différence entre les pressions de deux des pneumatiques est supérieure à un deuxième seuil déterminé ;
- activer la commande d'orientation si la commande d'orientation n'est pas activée ;
- mettre en oeuvre une loi de commande d'orientation modifiée par rapport à une loi de commande nominale utilisée lorsque les pneumatiques sont correctement gonflés.

Ce procédé est utilement mis en oeuvre lors des phases d'atterrissage ou de décollage, notamment lorsque la commande d'orientation est normalement désactivée. Ainsi, le procédé permet une activation rapide de la commande d'orientation dès la détection de l'un des évènements précités, et permet à la commande d'orientation de mettre en oeuvre immédiatement la loi de commande modifiée, ce qui empêche ou à tout le moins diminue l'embarquement des roues et les dégâts associés.

Bien sûr, si la commande d'orientation est déjà activée, il suffira alors de passer de la loi de commande nominale à la loi de commande modifiée en réponse à la détection des événements précités.

Bien évidemment, tout ceci n'a de sens que s'il est détecté que l'une au moins des roues de l'atterrisseur concerné est en contact avec le sol.

### DESCRIPTION DES FIGURES

L'invention sera mieux comprise à la lumière de la description détaillée qui suit en référence aux figures parmi lesquelles :
- la figure 1 est une vue de face d'un atterrisseur auxiliaire d'aéronef ;
- la figure 2 est une vue de dessus de l'atterrisseur de la figure 1 ;
- la figure 3 est un schéma d'un asservissement pour la mise en oeuvre du procédé de l'invention.

### DESCRIPTION DETAILLEE D'UN MODE DE REALISATION DE L'INVENTION

L'invention est ici décrite en relation avec un atterrisseur auxiliaire d'aéronef, par exemple un atterrisseur avant muni de deux roues orientables.

Un tel atterrisseur auxiliaire d'aéronef comporte typiquement un caisson 1 monté articulé sur la structure de l'aéronef. Un organe de contreventement (non représenté) s'étendant entre la structure de l'aéronef et la caisson permet de stabiliser le caisson 1 et donc l'atterrisseur dans la position déployée représentée ici.

Dans le caisson 1 coulisse une tige 2 dont l'extrémité inférieure porte un essieu 3 recevant des roues 4a, 4b. Un collier 5 est monté tournant sur la partie basse du caisson 1 pour être orienté de façon commandée par un organe d'orientation, ici des vérins 6 montés en « push-pull ». Le collier 5 et la tige 2 sont liés en rotation par un compas 7, de sorte que l'orientation du collier 5 entraîne l'orientation de la tige 2 et donc des roues 4a,4b. Au moins un capteur de position angulaire est disposé sur le caisson pour mesurer la position angulaire du collier 5 et donc des roues 4. Le capteur de position angulaire 8 délivre une information de position angulaire qui est exploitée par un calculateur d'orientation disposé dans l'aéronef qui commande l'orientation des roues 4a,4b en réponse à un ordre d'orientation généré par le pilote, par appui sur les pédales ou rotation d'un volant.

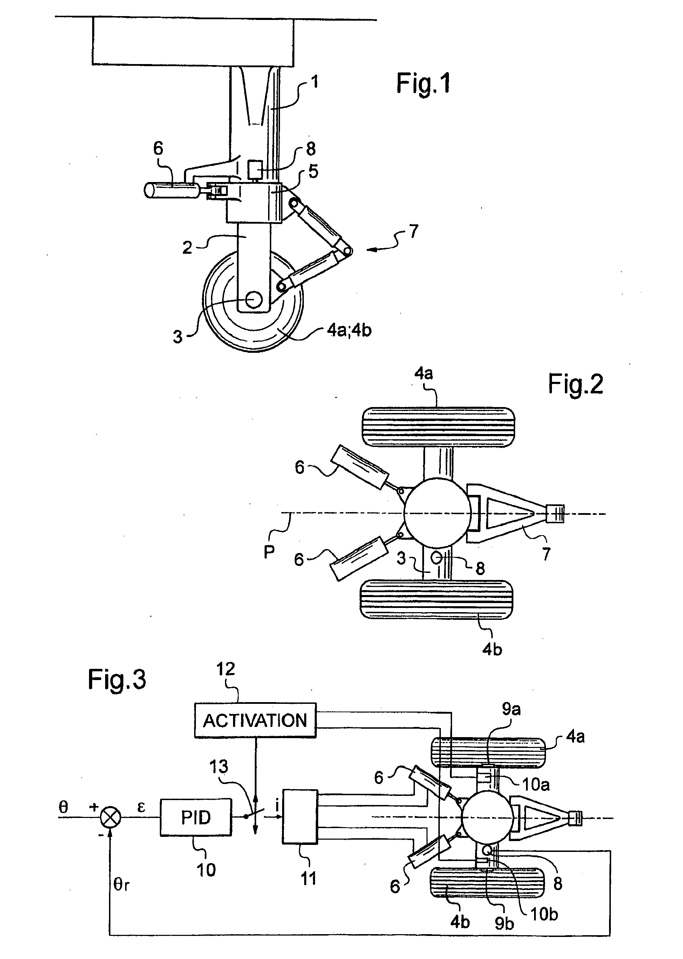

Un asservissement est illustré à la figure 3, où l'on voit que le signal de rétroaction θr est constitué l'information de position angulaire générée par le capteur de position angulaire 8. Plus précisément, l'asservissement, qui est mis en oeuvre par le calculateur d'orientation, comporte le calcul d'une erreur s entre une consigne d'orientation θ provenant par exemple d'un volant dans le cockpit, et le signal de rétroaction θr. L'erreur est ici fournie à un PID 10 qui génère un courant de commande i d'une servovalve 11 qui alimente les vérins 6 de l'organe d'orientation.

Tout ceci est bien connu et n'est rappelé qu'à titre d'information pour situer le contexte de l'invention.

Lors d'une phase d'atterrissage, la tige, qui forme avec le caisson un amortisseur télescopique, se trouve en position détendue. Dans cette position, une came solidaire de la tige coopère avec une came solidaire du caisson pour maintenir les roues 4a et 4b dans l'axe, comme illustré ici. En général, la commande d'orientation est neutralisée lors de la phase d'atterrissage pour éviter tout embarquement intempestif des roues suite à une défaillance de l'organe d'orientation ou du calculateur d'orientation. La commande d'orientation n'est en général activée que lorsque les roues ont touché le sol (et donc que la tige a commencé à s'enfoncer dans le caisson et que les deux cames sont éloignées), et que la vitesse longitudinale de l'aéronef soit descendue au dessous d'un seuil prédéterminé.

Cependant, si les roues de l'atterrisseur touchent le sol alors que les pressions dans les pneumatiques sont très différentes, l'effort du sol va transiter préférentiellement par la roue dont le pneumatique est le plus gonflé, ce qui va créer sur la partie orientable de l'atterrisseur un moment de pivotement qui peut provoquer l'embarquement de la partie orientable, alors que la commande d'orientation n'est pas encore activée.

Pour éviter un tel évènement, et selon l'invention, on surveille les pressions Pa, Pb des deux pneumatiques à l'aide de capteurs de pression respectifs 9a et 9b. On pourra par exemple utiliser des capteurs implantés dans les jantes des roues pour mesurer la pression régnant dans les pneumatiques, les capteurs communiquant par une antenne avec des récepteurs 10a,10b placés dans l'essieu des roues. Les signaux issus des récepteurs 10a, 10b sont fournis à un organe d'activation 12 qui commande ici un interrupteur 13 pour autoriser sélectivement la fourniture du courant de commande i à la servovalve 11.

Grâce aux capteurs de pression 9a, 9b, les évènements suivants vont pouvoir être détectés:
- l'une des pressions relevées dans l'un des pneumatiques est inférieure à un premier seuil déterminé P1 ; soit *Pa ou Pb* ≤ *P*1
- la différence entre les pressions relevées par les capteurs de pression 9a, 9b est supérieure à un deuxième seuil déterminé P2 ; soit |*Pa - Pb*| ≥ P2.

Dans le premier cas, l'un des pneumatiques est vraisemblablement crevé, tandis que dans le deuxième cas, l'un des pneumatiques est vraisemblablement dégonflé.

Selon l'invention, lorsque l'une de ces situations est détectée, l'organe d'activation 12 est adapté à activer la commande d'orientation, si elle ne l'est pas déjà, pour contrer toute tendance à l'embarquement de la partie inférieure orientable de l'atterrisseur. En pratique, l'organe d'activation 12 ferme l'interrupteur 13, permettant ainsi la commande de la servovalve 11 par l'asservissement de position angulaire. La commande d'orientation ainsi activée maintient la partie inférieure orientable dans l'axe, tant que le pilote ne commande pas un autre angle d'orientation. Ainsi, l'atterrissage peut se poursuivre avec les roues maintenues dans l'axe, même avec un pneumatique éclaté ou sérieusement dégonflé.

Selon l'invention, une fois la commande d'orientation activée en réponse à la détection de l'un des événements précités, celle-ci est programmée pour mettre en oeuvre une loi de commande modifiée par rapport à une loi de commande nominale utilisée dans une situation nominale dans laquelle les deux pneumatiques sont correctement gonflés.

De préférence, la ou les modifications sont choisies parmi les actions listées ci-dessous:
- limiter l'angle d'orientation de la partie orientable de l'atterrisseur (par exemple ±45°), pour n'autoriser que des virages larges et interdire les demi-tours serrés ;
- limiter la vitesse maximale de l'aéronef à laquelle les roues peuvent être orientées (par exemple 5 noeuds) pour n'autoriser les manoeuvres au sol qu'à basse vitesse ;
- limiter la vitesse angulaire d'orientation des roues (par exemple ±5 degrés/seconde) pour éviter tout mouvement brusque ;
- augmenter la sensibilité de la commande aux faibles angles (par exemple une orientation de 2,5 degrés pour une consigne de 5 degrés, soit un facteur 2) afin d'éviter des amplitudes d'orientation trop grandes ;
- augmenter la bande morte afin d'éviter des oscillations de la partie orientable de l'atterrisseur autour de 0 degré.
- réduire la dynamique de la commande en modifiant les gains de la commande, voire la structure du correcteur utilisé.

Bien sûr, si la commande d'orientation est déjà activée et fonctionne selon la loi de commande nominale, la détection de l'un des événements précités provoque le passage de la loi de commande nominale à la loi de commande modifiée.

Le procédé de l'invention peut être bien entendu appliqué dans toutes les phases où les roues touchent le sol, que la commande d'orientation soit ou non désactivée.

## Revendications

1. Procédé de gestion de l'orientation de roues (4a,4b) d'atterrisseur d'aéronef portées par une partie inférieure orientable de celui-ci, la partie inférieure étant associée à une commande d'orientation comportant un organe d'orientation (6) apte à orienter la partie inférieure de l'atterrisseur en réponse à un ordre d'orientation, **caractérisé en ce que**, le procédé comporte les étapes de :
- surveiller les pressions (Pa, Pb) des pneumatiques portés par les roues et, en réponse à la détection d'au moins l'un des évènements suivants:
* la pression de l'un des pneumatiques est inférieure à un premier seuil déterminé (P1);
* la différence entre les pressions de deux des pneumatiques est supérieure à un deuxième seuil déterminé (P2);
- activer la commande d'orientation si la commande d'orientation n'est pas activée ;
- mettre en oeuvre une loi de commande d'orientation modifiée par rapport à une loi de commande nominale utilisée lorsque les pneumatiques sont correctement gonflés.

2. Procédé selon la revendication 1, dans lequel la loi de commande d'orientation modifiée est modifiée par rapport à la commande nominale selon une ou plusieurs des actions suivantes:
- limiter l'angle d'orientation de la partie orientable de l'atterrisseur, de préférence à ±45 degrés ;
- limiter la vitesse maximale de l'aéronef à laquelle les roues peuvent être orientées, de préférence en dessous de 5 noeuds;
- limiter la vitesse angulaire d'orientation des roues, de préférence à ±5 degrés par seconde ;
- augmenter la sensibilité de la commande aux faibles angles, de préférence d'un facteur 2 ;
- augmenter la bande morte autour de 0 degré;
- réduire la dynamique de la commande.

## Patentansprüche

1. Steuerverfahren zum Steuern der Ausrichtung von Rädern (4a, 4b) eines Fahrgestells eines Luftfahrzeugs, die von einem lenkbaren unteren Teil des Fahrgestells getragen werden, wobei der untere Teil mit einer Ausrichtsteuerung verbunden ist, die ein Ausrichtorgan (6) umfasst, das in der Lage ist, den unteren Teil des Fahrgestells als Antwort auf einen Ausrichtbefehl auszurichten, **dadurch gekennzeichnet, dass** das Verfahren die folgenden Schritte umfasst:
- Überwachen des Druckes (Pa, Pb) der von den Rädern getragenen Reifen und als Antwort auf die Feststellung mindestens eines der folgenden Ereignisse:
* der Reifendruck eines der Reifen liegt unterhalb eines ersten vorgegebenen Schwellenwerts (P1);
* der Unterschied zwischen den Drücken zweier Reifen liegt oberhalb eines zweiten vorgegebenen Schwellenwerts (P2);
- Aktivieren des Befehls zur Ausrichtung, falls der Ausrichtbefehl nicht aktiviert ist;
- Anwenden einer relativ zu einer nominalen Steuerungsregel, die angewendet wird, wenn die Reifen korrekt aufgepumpt sind, geänderten Steuerungsregel zur Steuerung der Ausrichtung.

2. Verfahren nach Anspruch 1, bei dem die geänderte Steuerungsregel zur Steuerung der Ausrichtung relativ zur nominalen Regel gemäß einer oder mehrerer der folgenden Aktionen geändert wird:
- Begrenzen des Ausrichtwinkels des lenkbaren Teils des Fahrgestells, vorzugsweise auf ± 45 Grad;
- Begrenzen der maximalen Geschwindigkeit des Luftfahrzeugs, bei der die Räder ausgerichtet werden können, vorzugsweise auf unter 5 Knoten;
- Begrenzen der Winkelgeschwindigkeit zur Ausrichtung der Räder, vorzugsweise auf ± 5 Grad pro Sekunde;
- Erhöhen der Sensibilität der Steuerung auf kleine Winkel, vorzugsweise um einen Faktor 2;
- Erhöhen des Totbereiches auf ca. 0 Grad,
- Reduzieren der Steuerungsdynamik.

## Claims

1. A method of managing the steering of aircraft undercarriage wheels (4a, 4b) carried by a steerable bottom portion of the undercarriage, the bottom portion being associated with steering control including a steering member (6) suitable for steering the bottom portion of the undercarriage in response to a steering order, the method being **characterized in that** it comprises the steps of:
· monitoring the pressures (Pa, Pb) of the tires carried by the wheels, and in response to detecting at least one of the following events:
· the pressure of one of the tires is less than a first predetermined threshold (P1); and
· the difference between the pressures of two of the tires is greater than a second determined threshold (P2);
· activating the steering control if the steering control is not activated; and
· implementing a steering control relationship that is modified compared with a nominal control relationship used when the tires are properly inflated.

2. A method according to claim 1, wherein the modified steering control relationship is modified relative to the nominal control relationship in application of one or more of the following actions:
· limiting the steering angle of the steerable portion of the undercarriage, preferably to ±45 degrees;
· limiting the maximum speed of the aircraft at which the wheels can be steered, preferably to less than 5 knots;
· limiting the angular speed at which the wheels can be steered, preferably to ±5 degrees per second;
· increasing the sensitivity of the control at small angles, preferably by a factor of 2;
· increasing the dead region around 0 degrees; and
· reducing the dynamics of the control.
